# EUROPEAN PATENT SPECIFICATION

(11) **EP 2 186 711 B1**
(45) Date of publication and mention of the grant of the patent: **20.06.2012**
(21) Application number: 09176167.6
(22) Date of filing: 17.11.2009
(51) Int. Cl.: B62D 6/00

(54) **Electric power steering apparatus**
Elektrische Servolenkung
Appareil de direction assistée électrique

(30) Priority: 18.11.2008 JP 2008294566
(43) Date of publication of application: 19.05.2010
(73) Proprietor: Honda Motor Co., Ltd., Tokyo 107-8556 (JP)
(72) Inventor: Ehara, Shigeki, Saitama 351-0193 (JP)
(74) Representative: Herzog, Markus

(56) References cited:
- EP-A2- 1 584 544
- JP-A- 2006 175 992

## Description

### BACKGROUND OF THE INVENTION

### 1. Field of the Invention

The present invention relates to an electric power steering apparatus.

### 2. Description of the Related Art

When a driver brakes or turns at a curve on a road surface having different friction coefficients (split µ road), the vehicle becomes in an oversteer status which may make the vehicle's behavior unstable. In this status, a driver turns a steering wheel in an opposite direction to a turning direction of the vehicle to stable the vehicle. This operation is so-called "counter steer operation".

In this operation, the driver turns the steering wheel against a force which tends to return the steerable wheels to a neutral position by a power steering apparatus (for example, an electric power steering apparatus) installed in the motor vehicle, so that a steering force generated by the driver becomes large. This may increase a load on the driver.

JP 2006-175992 A discloses, at a paragraph 0011, a technology for reducing a load on a driver operating the steering wheel in braking on a split µ road by that the electric power steering apparatus generates an assist steering torque to turn the steering wheel toward a stable driving. The preamble of claim 1 is based on this document.

However, during this operation, a reaction force is generated at the steering wheel by the electric power steering apparatus because the electric power steering apparatus generates an assist steering torque of returning the steerable wheels to the neutral position.

The reaction force reduces an effect of the assist steering torque for assisting turning the steering wheel toward a stable operation of the motor vehicle.

Accordingly, it is desirable to improve the technique disclosed by JP 2006-175992 A to further decrease the load on the driver who tries to control the motor vehicle in the oversteer status toward stable operation.

### SUMMARY OF THE INVENTION

An aspect of the present invention provides an electric power steering apparatus in accordance with claim 1.

The electric power steering apparatus is capable of decreasing a load on a driver when the driver operates a steering wheel in such a direction that the vehicle in the oversteer status becomes stable.

The electric power steering apparatus is capable of applying a reaction force having a magnitude according to a steering angle of the steerable wheels in place of a motor vehicle with a VSA controller for determining whether the motor vehicle is in an oversteer status.

The electric power steering apparatus is capable of decreasing a gain in generating the reaction force in accordance with the steering angle by the steering angle reaction force controller when the VSA controller determines that the motor vehicle is in an oversteer status.

When the motor vehicle is in the oversteer status, the steering angle response controller decreases the gain in generating according to the steering angle to make the reaction force applied to a steering mechanism smaller. Accordingly, the load on the driver operating the steering mechanism toward a stable status can be decreased.

The electric power steering apparatus comprises a yaw rate response controller, including a yaw rate sensor, configured to apply a reaction force according to an actual yaw rate of the vehicle to the steering mechanism. The steering angle reaction force controller decreases interference between the reaction force according to the actual yaw rate and the reaction force according to the steering angle.

Therefore, interference between the reaction force according to the actual yaw rate and the reaction force according to the steering angle can be decreased. Thus, a load on the driver operating the steering wheel in such a direction that the actual yaw rate is cancelled can be decreased.

Preferably, the VSA controller determines that the vehicle is in the oversteer status, when the actual yaw rate of the vehicle is greater than a model yaw rate set in accordance with at least, the steering angle of the steerable wheels and a vehicle speed of the vehicle.

According to this aspect, the VSA controller can determine that the vehicle is in the oversteer status when the actual yaw rate of the vehicle is greater than a model yaw rate set on the basis of a steering angle and vehicle speed of steerable wheels. Thus, the steering angle reaction force controller decreases a gain of the reaction force according to the steering angle to be applied to the steering mechanism when the actual yaw rate is greater than the model yaw rate to make the reaction force according to the steering angle applied to the steering mechanism smaller. This decreases a log on the driver operating the steering mechanism in such a direction that the vehicle becomes stable.

An aspect of the present invention provides an electric power steering apparatus capable of efficiently decrease the load on the drier when the driver operates the steering wheel in such a direction that the vehicle in the oversteer status becomes stable.

### BRIEF DESCRIPTION OF THE DRAWINGS

The object and features of the present invention will become more readily apparent from the following detailed description taken in conjunction with the accompanying drawings in which:
Fig. 1 is a block diagram of an electric power steering apparatus and a vehicle stabilizing system according to an embodiment of the present invention;
Fig. 2 is a block diagram of an EPS ECU and a vehicle stability assist including a VSA ECU according to the embodiment of the present invention;
Fig. 3A is a chart showing a relation between a steering angle of steerable wheels and a steering reaction force control quantity;
Fig. 3B is a chart showing an example of a relation between an actual yaw rate of the motor vehicle and a yaw rate reaction force control quantity;
Fig. 4A is a block diagram of a steering angle reaction force controller with a function of decreasing a gain used for calculating a steering reaction force control quantity according to the embodiment of the present invention;
Fig. 4B is a flowchart of decreasing the gain used for calculating the steering reaction force control quantity;
Fig. 5A is a block diagram of the steering angle reaction force controller with a function of stopping the reaction force control; and
Fig. 5B is a flowchart of process of stopping the reaction force control.

The same or corresponding elements or parts are designated with like references throughout the drawings.

### DETAILED DESCRIPTION OF THE INVENTION

With reference to drawings will be described an embodiment of the present invention.

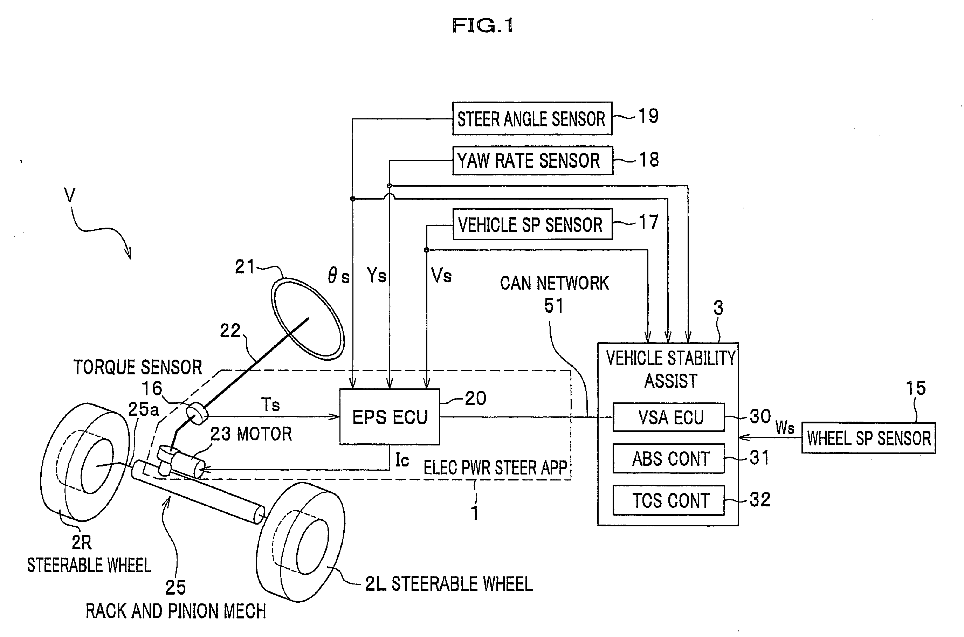

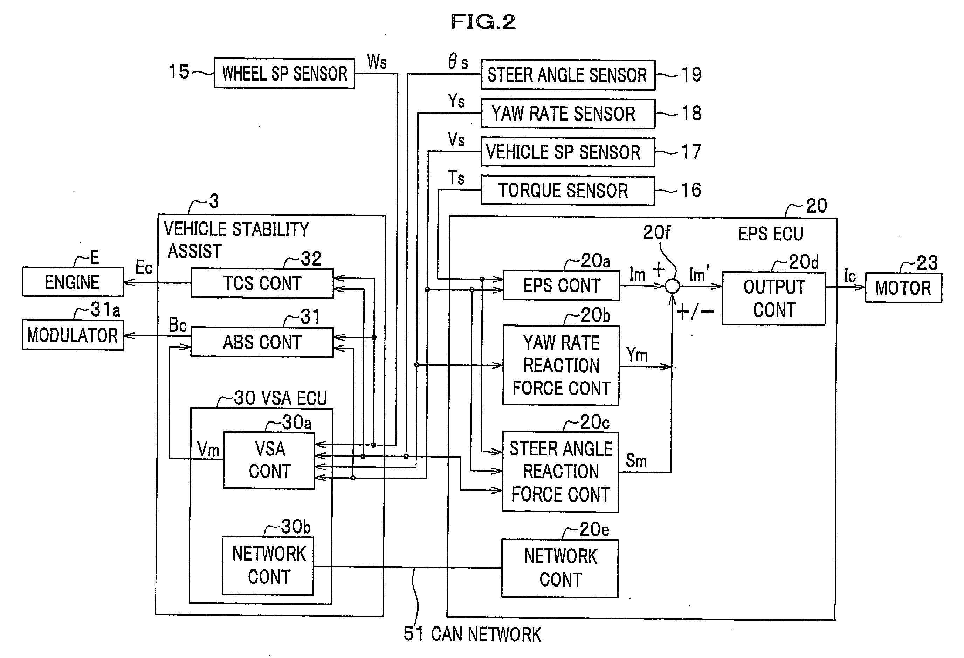

Fig. 1 is a schematic diagram of an electric power steering apparatus and a vehicle stabilizing system installed in a vehicle. Fig. 2 is a block diagram of an EPS ECU and a vehicle stability assist 3 including a VSA ECU.

As shown in Fig. 1, in a steering mechanism of the vehicle V, a steering wheel 21 is fixed to a steering shaft 22 rotated integrally with a pinion gear (not shown) engaged with a rack shaft 25a of a rack and pinion mechanism 25.

When a driver operates (turns) the steering wheel 21, a pinion gear (not shown) is rotated integrally with the steering shaft 22, which moves a rack shaft 25a horizontally to steer the right and left steerable wheels 2R and 2L coupled to the rack shaft 25a.

The vehicle V includes an electric power steering apparatus (EPS) 1.

The electric power steering apparatus 1 includes an electric motor 23 which generates an assist steering force (assist steering torque) for decreasing a steering force when the driver operates the steering wheel 21 as an electrically generated drive force to apply the assist steering force to the steering mechanism.

An output shaft of the motor 23 is engaged with a steering shaft 22 through gears (not shown). When the driver steers the steering wheel 21, rotation of the output shaft of the motor 23 generates an assist steering torque on the steering shaft 22 to decrease the steering force by the driver.

Moreover, the electric power steering apparatus 1 includes an EPS ECU 20 for driving the motor 23.

The EPS ECU 20 includes a microcomputer including a CPU (Central Processing Unit), a ROM (Read Only Memory), a RAM (Random Access Memory), etc., and peripheral circuits. The motor 23 is driven through executing a program stored in, for example, the ROM. The EPS ECU 20 will be described in detail later.

The steering shaft 22 is provided with a torque sensor 16 that detects a steering torque generated when the steering wheel 21 is turned to output a torque signal Ts. The torque signal Ts is applied to the EPS ECU 20 which calculates the steering torque generated in the steering shaft 22. The EPS ECU 20 controls driving of the motor 23 on the basis of the calculated steering torque to generate an electrically generated drive force according to the assist steering torque for assisting the driver in generating the steering force on the steering wheel 21.

Further, connected to the EPS ECU 20 are a vehicle speed sensor 17, a yaw rate sensor 18, and a steering angle sensor 19. The vehicle speed sensor 17 detects a vehicle speed by counting pulses per a unit interval to output a vehicle speed signal Vs.

The yaw rate sensor 18 outputs, for example, a value of "0" when no yaw moment is generated in the vehicle V, a positive value when a yaw moment in a left direction, and a negative value when the yaw moment in a right direction.

The EPS ECU 20 is supplied with the vehicle speed signal Vs outputted by the vehicle speed sensor 17 and a yaw rate signal Ys outputted by the yaw rate sensor 18. The EPS ECU 20 calculates the vehicle speed and a yaw rate (actual yaw rate).

A steering angle sensor 19 is a sensor for detecting a steering angle of the steerable wheels 2R and 2L, and comprises, for example, a rack position sensor for detecting a quantity of movement of the rack shaft 25a. The steering angle sensor 19 applies the steering angle signal θ*ₛ* to the EPS ECU 20 which calculates the steering angle of the steerable wheels 2R and 2L on the basis of the steering angle signal θ*ₛ*.

Further, the vehicle V is provided with a vehicle stability assist (VSA) 3. The vehicle stability assist 3 includes the VSA ECU 30, an ABS (Antilock Brake System) controller 31, a TCS (Traction Control System) controller 32 and assists in stabilizing a behavior of the vehicle traveling on a slippy road surface (low µ road) and a split µroad by combining a brake control, a traction control, and a skid control.

Connected to the vehicle stability assist 3 is a wheel speed sensor 15 detecting rotation speeds of the steerable wheels 2R and 2L and left and right rear wheels, respectively, and outputting wheel speed signals Ws for respective wheels. The vehicle stability assist 3 calculates the wheel speeds of respective wheels on the basis of the wheel speed signals Ws. The vehicle stability assist 3 will be described more specifically later.

The vehicle V is provided with a network having a CAN (Controller Area Network) protocol (hereinafter referred to as CAN network) as an in-vehicle LAN (local Area Network) to provide a preferable configuration in which the VSA ECU 30 and the EPS ECU 20 are both coupled to the CAN network 51. According to this configuration, the VSA ECU 30 and the EPS ECU 20 can communicate with each other through the CAN network 51.

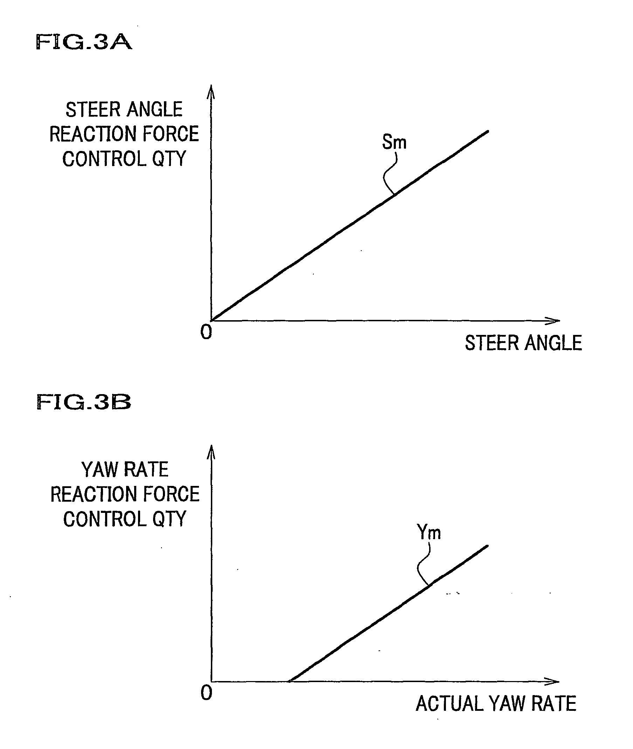

Fig. 2 is a block diagram of the EPS ECU and the vehicle stability assist 3. Fig. 3A shows an example of a relation between the steering angle of the steerable wheels and a steering angle reaction force control quantity. Fig. 3B shows an example of a relation between an actual yaw rate of the vehicle and a yaw rate reaction force control quantity.

As shown in Fig. 2, the EPS ECU 20 includes an EPS controller 20a, a yaw rate reaction force controller 20b, a steering angle reaction force controller 20c, an output controller 20d, and a network controller 20e.

The network controller 20e has a function of coupling the EPS ECU 20 to the CAN network 51 which is the in-vehicle LAN to control communication with other units such as the VSA ECU 30 connected to the CAN network 51.

The EPS controller 20a to which the torque sensor 16 and the vehicle speed sensor 17 are connected calculates a control quantity Im for the motor 23 according to the vehicle speed calculated on the basis of the vehicle speed signal Vs and the steering torque calculated on the basis of the torque signal Ts to set a steering torque and an assist steering torque according to the vehicle speed as basic operation of the electric power steering apparatus 1.

The control quantity Im for the motor 23 calculated by the EPS controller 20a is applied to an adder 20f.

A method of calculating the control quantity Im for the motor 23 on the basis of the steering torque and the vehicle speed is known and thus, a detailed description will be omitted.

Connected to the steering angle reaction force controller 20c are a torque sensor 16, the vehicle sensor 17, and the steering angle sensor 19. The steering angle reaction force controller 20c calculates the vehicle speed on the basis of the vehicle speed signal Vs applied by the vehicle speed sensor 17.

Further, the steering angle reaction force controller 20c calculates the steering angle of the steerable wheels 2R and 2L on the basis of the steering angle signal θ*ₛ* applied by the steering sensor 19.

The steering angle reaction force controller 20c calculates a steering reaction force control quantity Sm on the basis of the calculated vehicle speed and the steering angle.

As shown in Fig. 3A, for example, the steering angle reaction force control quantity Sm has a characteristic such that when the steering angle of the steerable wheels 2R and 2L (see Fig. 2) has a value of "0", the steering angle reaction force control quantity Sm is "0", and the steering angle reaction force control quantity Sm increases with increase in the steering angle of the steerable wheels 2R and 2L. The relation between the steering angle reaction force control quantity Sm and the steering angle can be set for each vehicle speed through experiments, and the relation is stored in a storage (not shown) as map data for each vehicle speed.

The steering angle reaction force controller 20c can calculate the steering reaction force control quantity Sm with reference to the map data on the basis of the calculated vehicle speed and steering angle.

As mentioned above, the control in which the steering angle reaction force controller 20c calculates the steering angle reaction force control quantity may be referred to as "reaction force control".

The relation between the steering angle and the steering angle reaction force control quantity Sm for the steerable wheels is only an example (linear), but the relation between the steering angle and the steering reaction force control quantity Sm for the steerable wheels may be represented by a curve.

The EPS ECU 20 can calculate a value of torque (hereinafter referred to as a steering reaction force torque) having a component that returns the steerable wheels 2R and 2L (see Fig. 1) to the neutral position in accordance with the steering angle reaction force control quantity Sm calculated by the steering angle reaction force controller 20c. The EPS ECU 20 can assist in straightness stability by applying the steering a reaction force to the steering mechanism of the vehicle V (see Fig. 1) as a component of the assist steering torque.

The steering angle reaction force is a torque calculated in accordance with the steering angle of the steerable wheels 2R and 2L (see Fig. 1) and also referred to as "a reaction force according to the steering angle".

The EPS ECU 20 causes the motor 23 to generate the assist steering torque including the steering reaction force torque (a reaction force according to the steering angle).

As shown in Fig. 2, the yaw rate sensor 18 is connected to the yaw rate reaction force controller 20b to input the yaw rate signal Ys. The yaw rate reaction force controller 20b calculates the actual yaw rate of the vehicle V (see Fig. 1) on the basis of the yaw rate signal Ys as well as calculates a yaw rate reaction force control quantity Ym according to the actual yaw rate of the vehicle V which is added to the steering angle reaction force control quantity Sm, and the result is applied to the adder 20f.

The yaw rate reaction force control quantity Ym is a control quantity for causing the motor 23 to generate a torque (hereinafter referred to as a yaw rate reaction force torque) for assisting a steering force when the driver turns the steering wheel 21 (see Fig. 1) in such a direction that the actual yaw rate of the vehicle V decreases and is for applying a yaw rate reaction force torque to the steering mechanism.

The yaw rate reaction force torque is a torque calculated in accordance with the actual yaw rate of the vehicle V and also referred to as a reaction force according to the actual yaw rate.

The EPS ECU 20 is also referred to as a yaw rate response controller because the EPS ECU 20 causes the motor 23 to generate the yaw rate reaction force torque (reaction force according to the actual yaw rate).

As shown in Fig. 3B, for example, the yaw rate reaction force control quantity Ym has a characteristic that the yaw rate reaction force control quantity Ym is "0" in a region where the actual yaw rate is small and increases with increases of the actual yaw rate. Such a relation between the yaw rate reaction force control quantity Ym and the actual yaw rate can be set through experiments or the like and can be stored in the storage (not shown) as map data.

The yaw rate reaction force controller 20b can calculate the yaw rate reaction force control quantity Ym according to the actual yaw rate of the vehicle V on the basis of the calculated actual yaw rate with reference to the map data.

The relation between the actual yaw rate and the yaw rate reaction force control quantity Ym shown in Fig. 3B is an example (linear) and may be a curve.

The adder 20f adds the yaw rate reaction force control quantity Ym to the steering angle reaction force control quantity Sm to generate an added value, and subtracts the added value from or adds the added valu to the control quantity Im for the motor 23 applied by the EPS controller 20a to calculate a control quantity Im' which is applied to an output controller 20d.

The output controller 20d calculates a drive current Ic for driving the motor 23 on the basis of the control quantity Im' and applies the drive current Ic to the motor 23.

Next will be described the vehicle stability assist 3.

As shown in Fig. 2, the vehicle stability assist 3 includes the VSA ECU 30, an ABS controller 31, and a TCS controller 32.

The ABS controller 31 calculates a brake pressure control quantity Bc, which is a preferable value in braking the vehicle, on the basis of the vehicle speed applied by the vehicle speed sensor 17, the wheel speeds of respective vehicle wheels of the vehicle V calculated on the basis of the wheel speed signals Ws applied by the wheel speed sensor 15, and the like. The brake pressure control quantity Bc is corrected with a VSA correction quantity Vm (mentioned later) applied by a VSA controller 30a and applies the brake pressure control quantity to a modulator 31a. This configuration provides a preferable brake characteristic according to a traveling status and a circumference.

The TCS controller 32 calculates an engine control quantity Ec on the basis of the wheel speeds of respective vehicle wheels of the vehicle V calculated on the basis of the wheel speed signals Ws applied by the wheel speed sensor 15, the steering angle of the steerable wheels 2R and 2L (see Fig. 1) calculated on the basis of the steering angle signal θ*ₛ* applied by the steering angle sensor 19, and the like to control the output of the engine E with suppression of wheel slip.

The VSA ECU 30 includes, for example, a microcomputer including a CPU, a ROM, and a RAM (not shown) and peripheral circuits, and the yaw rate sensor 18 and the steering angle sensor 19 are connected to the VSA ECU 30.

The VSA ECU 30 calculates the steering angles of the steerable wheels 2R and 2L and the actual yaw rate of the vehicle V (see Fig. 1) on the basis of the yaw rate signal Ys applied by the yaw rate sensor 18 and the steering angle signal θ*ₛ* applied by the steering angle sensor 19 to control the vehicle stability assist 3, for example, through executing a program stored in the ROM.

The VSA ECU 30 includes a VSA controller 30a and a network controller 30b.

The network controller 30b has a function of connecting the VSA ECU 30 to the CAN network which is the in-vehicle LAN to control other units (for example, the EPS ECU 20 ) connected to the CAN network.

The VSA controller 30a calculates a VSA correction quantity Vm for correcting the brake pressure control quantity Bc to suppress skid of the vehicle V on the basis of the steering angle of the steerable wheels 1R and 2L calculated on the basis of the yaw rate of the vehicle V calculated on the basis of the yaw rate signal Ys applied by the yaw rate sensor 18, the vehicle speed of vehicle V (see Fig. 1) calculated on the basis of the vehicle speed signal Vs applied by the vehicle speed sensor 17, and the steering angle of the steerable wheels 2R and 2L calculated on the basis of the steering angle signal θ*ₛ* applied by the steering angle sensor 19.

The calculated VSA correction quantity Vm is applied to the ABS controller 31.

Further, the VSA controller 30a has a function of determining whether the vehicle V travels on a split µ road having different friction coefficients on the right and left vehicle wheels.

The VSA controller 30a calculates the wheel speed of respective vehicle wheels on the basis of the wheel speed signals applied by the wheel speed sensor 15. Further, the VSA controller 30a calculates the vehicle speed of the vehicle V on the basis of the vehicle speed signal Vs applied by the vehicle speed sensor 17. The VSA controller 30a calculates slip rates of respective vehicle wheels on the basis of the wheel speeds of respective vehicle wheels and the vehicle V.

If the slip rates of respective vehicle wheels are largely different between the right and left vehicle wheels (difference is greater than a predetermined value), the VSA controller 30a determines that the vehicle is traveling on a split µ road where the wheels on the side of the vehicle wheel showing a greater slip rate travel on a side of the road having a smaller friction coefficient.

When determining that the vehicle V is traveling on a split µ road, the VSA controller 30a corrects the VSA correction quantity Vm to suppress turn of the vehicle V caused by a difference in braking force between the left and right vehicle wheels.

The ABS controller 31 corrects the brake pressure control quantity Bc with the VSA correction quantity Vm applied by the VSA controller 30a to brake the vehicle V with preferably suppressing skid.

Further, while the vehicle V travels on the split µ road, though the driver brakes, the ABS controller 31 can stabilize the behavior of the vehicle V.

However, the vehicle V may turn because the vehicle V becomes in an oversteer status, when the driver brakes and the control quantities exceed a control limit of the ABS controller 31 while the vehicle travels, for example, on a split µ road. In this case, the VSA controller 30a according to the embodiment detects the oversteer status of the vehicle V on the basis of the yaw rate calculated on the basis of the yaw rate signal Ys applied by the yaw rate sensor 18.

More specifically, the VSA controller 30a determines that the vehicle V turns on the split *µ* road in the oversteer status, when the steering angle, calculated on the basis of the steering angle signal θ*ₛ* applied by the steering sensor 19, is "0" of the steerable wheels 2R and 2L, i.e., in the neutral position, while the vehicle V is turning.

In this embodiment, when determining that the vehicle V turns (rotates) on the split *µ* road, the VSA controller 30a transmits a signal (OS signal) indicating that the vehicle V is in the oversteer status to the EPS ECU 20 through the CAN network 51.

Further, the VSA controller 30a calculates the yaw rate (model yaw rate) on the basis of the wheel speeds of the steerable wheels 2R and 2L of the vehicle V and the vehicle speed of the vehicle V as well as determines that the vehicle V is in the oversteer and the understeer statuses by comparing the yaw rated calculated on the basis of the yaw rate signal Ys applied by the yaw rate sensor 8 with the model yaw rate.

More specifically, the VSA controller 30a determines that the vehicle is in the oversteer status when the actual yaw rate is greater than the model yaw rate and determines that the vehicle is in the understeer condition when the actual yaw rate is smaller than the model yaw rate.

When determining that the vehicle V is in the oversteer status, the VSA controller 30a has a function of transmitting the OS signal to the EPS ECU 20 through the CAN network 51.

This configuration enables the EPS ECU 20 according to the embodiment to detect that the vehicle V is in the oversteer status.

The VSA controller 30a according to the embodiment, which can determine that the vehicle V is in the oversteer status, may be also referred to an oversteer determining unit.

When detecting that the vehicle V is in the oversteer status, the EPS ECU 20 according to the embodiment decreases a gain used in calculating the steering angle reaction force Sm to make the steering reaction force control quantity Sm.

Generally, when the vehicle V is in the oversteer status, the driver may stabilize the vehicle V by the "counter steer operation" of the steering wheel 21 (see Fig. 1) in an opposite direction to the direction in which the vehicle V turns.

During this operation, the electric power steering apparatus 1 generates the yaw rate reaction force torque according to the yaw rate reaction force control quantity Ym calculated by the yaw rate reaction force controller 20b to reduce the load on the driver.

On the other hand, the motor 23 generates the steering angle reaction force torque that returns the steerable wheels 2R and 2L (see Fig. 1) to the neutral position according to the steering angle reaction force control quantity Sm calculated by the steering angle reaction force controller 20c through executing the reaction force control.

Because the yaw rate reaction force torque generated according to the yaw rate reaction force control quantity Ym and the steering angle reaction force torque generated according to the steering angle reaction force control quantity Sm are torques acting on the opposite directions, the steering angle reaction force torque interfere with the yaw rated reaction force torque with cancellation. Thus, a force to be generated by the driver for operating the steering wheel 21 increases. Accordingly, the load on the driver increases.

To improve this, in the embodiment, the load on the driver is reduced by the configuration that the EPS ECU 20 makes the steering angle reaction force torque smaller by making the steering angle reaction force control quantity Sm small when the vehicle V is in the oversteer status.

More specifically, when the vehicle V is in the oversteer status, the EPS ECU 20 makes the steering angle reaction force control quantity Sm small calculated by the steering angle reaction force controller 20c by multiplication by the gain used in calculating the steering angle reaction force control quantity to make small the steering angle reaction force torque generated according to the steering angle reaction force control quantity Sm.

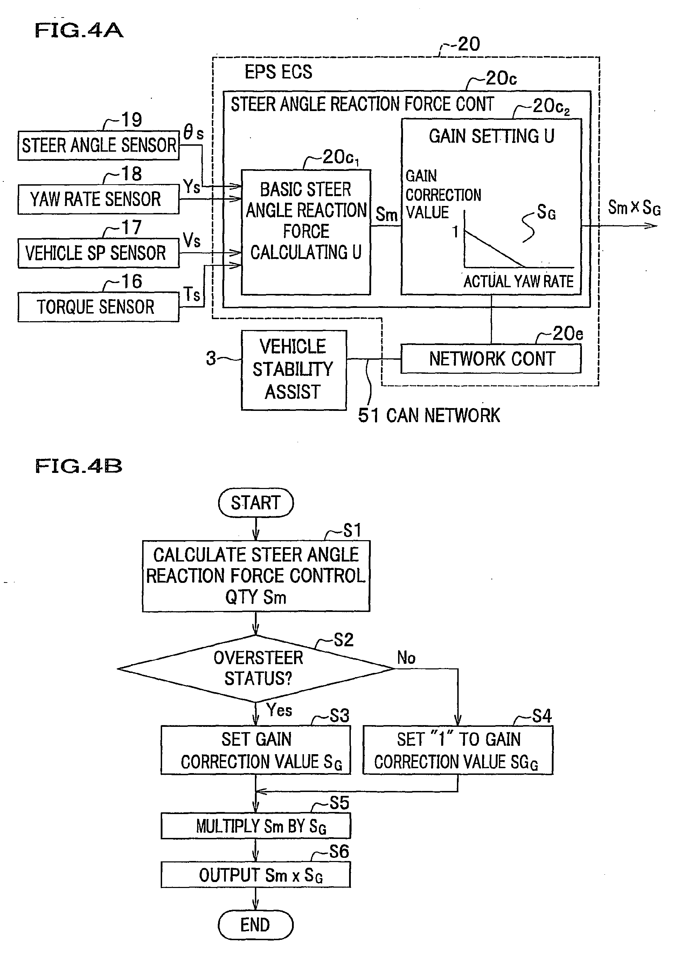

Fig. 4A is a block diagram of the steering angle reaction force controller having the function of decreasing the gain used in calculating the steering angle reaction force control quantity.

To make the EPS ECU 20 have the function of decreasing the gain used in calculating the steering angle reaction force control quantity, it is preferable that as shown in Fig. 4A, the EPS ECU 20 includes a basic steering angle reaction force calculating unit 20c₁ and a gain setting unit 20c₂.

The basic steering angle reaction force calculating unit 20c₁ calculates the steering angle reaction force control quantity Sm as mentioned above.

Further, the gain setting unit 20c₂ sets a gain correction value SG used in multiplying the steering angle reaction force control quantity Sm calculated by the basic steering angle reaction force calculating unit 20c₁ and outputs a value obtained by multiplying the steering angle reaction force control quantity Sm by the gain correction value SG.

Preferably, the gain correction value SG is, for example, between values of "1" and "0", and set in accordance with the actual yaw rate of the vehicle V.

More specifically, when the actual yaw rate of the vehicle V is large, in which case, a steering quantity of the steering wheel 21 by the driver is large, it is preferable that the gain correction value SG is such that the steering angle reaction force control quantity Sm is made smaller. On the other hand, when the actual yaw rate of the vehicle V is small, in which case the steering quantity for the steering wheel 21 by the driver is small, it is preferable that the gain correction value SG is a value near the steering angle reaction force control quantity Sm calculated by the basic steering angle reaction force calculating unit 20c, i.e., a value near "1".

The gain correction value SG is a characteristic value of the vehicle V and thus, can be previously obtained by experiments or the like. The gain correction value SG is stored in a storage (not shown) as map data corresponding to the actual yaw rate. The gain setting unit 20c₂ in the steering angle reaction force controller 20c can set the gain correction value SG by which the steering angle reaction force control quantity Sm is multiplied with reference to the map data correspondingly to the actual yaw rate of the vehicle V calculated on the basis of the yaw rate signal Ys applied by the yaw rate sensor 18.

The steering angle reaction force controller 20c shown in Fig. 4A can decrease the gain used in calculating the steering angle reaction force control quantity Sm correspondingly (according) to the actual yaw rate of the vehicle V by multiplying the steering angle reaction force control quantity Sm calculated by the basic steering angle reaction force calculating unit 20c₁ by the gain correction value SG.

More specifically, as shown in Fig. 4B, the basic steering angle reaction force calculating unit 20c₁ (see Fig. 4A) in the steering angle reaction force controller 20c calculates the steering angle reaction force control quantity Sm on the basis on the vehicle speed of the vehicle V and the steering angle of the steerable wheels 2R and 2L as mentioned above (step S1). In step S2 it is determined whether the vehicle V is in the oversteer status.

The gain setting unit 20c₂ (see Fig. 4A) in the steering angle reaction force controller 20c sets in step S3 the gain correction value SG corresponding to the actual yaw rate when the vehicle V is in the oversteer status (Yes, in the step S2).

On the other hand, when the vehicle V is not in the oversteer status (No, in step S2), the gain setting unit 20c₂ sets "1" to the gain correction value SG (step S4).

The gain setting unit 20c₂ multiplies the steering angle reaction force control quantity Sm by the gain correction value SG (step S5) and outputs a product of the steering angle reaction force control quantity Sm and the gain correction value SG, i.e., "Sm x SG" (step S6).

The gain setting unit 20c₂ shown in Fig. 4A determines in step S2 whether the vehicle V is in the oversteer status. This is based on the detection in the vehicle stability assist 3.

As mentioned above, the vehicle stability assist 3 according to the embodiment has the function of transmitting the OS signal indicating that the vehicle V is in the oversteer status to the EPS ECU 20 through the CAN network 51.

Accordingly, the gain setting unit 20c₂ can detect that the vehicle is in the oversteer status when receiving the OS signal transmitted by the vehicle stability assist 3 through the network controller 20e.

The process shown in Fig. 4B is done by executing a program in the EPS ECU 20 shown in Fig. 4A in phase with timing when the EPS ECU 20 calculates the assist steering torque by the EPS ECU 20.

The steering angle reaction torque that returns the steerable wheels 2R and 2L of the vehicle V to the neutral position has a value corresponding to the steering reaction control quantity Sm. When the steering angle reaction force control quantity Sm becomes small, the steering angle reaction torque becomes small. Accordingly, when the vehicle V is in the oversteer status, a component of the steering angle reaction force torque in the assist steering torque calculated by the EPS ECU 20 becomes small.

Thus, a magnitude of the torque (steering angle reaction torque) interfering with the yaw rate reaction torque calculated by the yaw rate reaction force controller 20b based on the yaw rate reaction force control quantity Ym becomes small, so that interference of the yaw rate reaction force torque with the steering angle reaction torque can be decreased. Further, the load on the driver steering the steering wheel 21 can be decreased.

Further a steering angle reaction force torque according to the actual yaw rate of the vehicle V is preferably generated which turns the steerable wheels 2R and 2L to the neutral position, so that stability of the vehicle is preferably maintained.

As mentioned above, the EPS ECU 20 according to the embodiment can make the component of the steering angle reaction force torque small by multiplying the steering angle reaction force control quantity Sm by the gain correction value SG when the vehicle V is in the oversteer status. In other words, the EPS ECU 20 can decrease the gain of the steering angle torque.

As shown in Figs. 4A and 4B, in addition to the configuration that the steering angle reaction force control quantity Sm is multiplied by the gain correction value SG, for example, there may be provided a configuration in which a steering angle reaction force controller 20 stops the reaction force control.

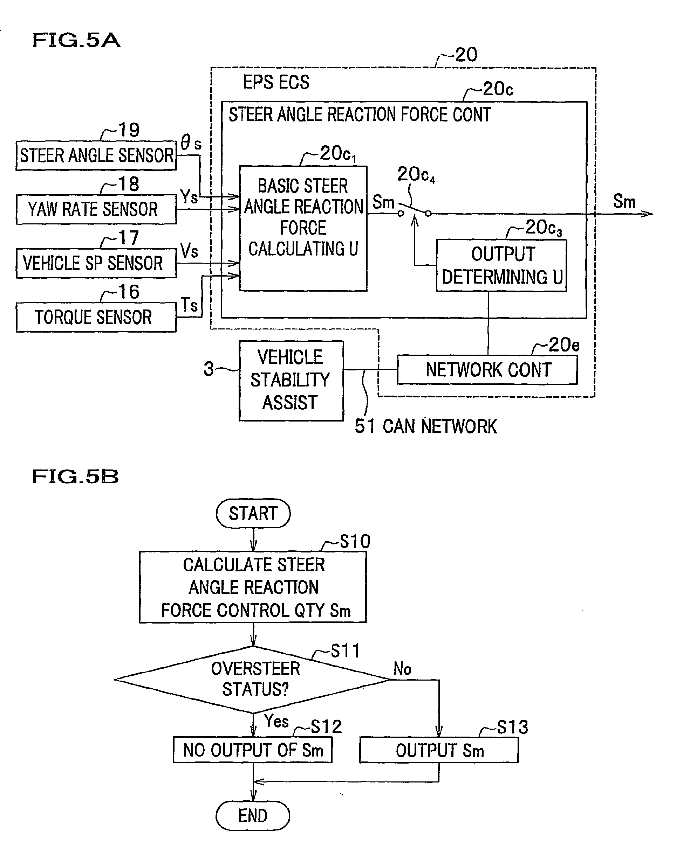

For example, in place of the gain setting unit 20c₂ shown in Fig. 4A, as shown in Fig. 5A, a steering angle reaction force controller 20c shown in Fig. 5A may be used which includes an output determining unit 20c₃ and an output control switch 20c₄.

When the output determining unit 20c₃ detects that the vehicle V is in the oversteer status, the output determining unit 20c₃ turns off the switch 20c₄ to stop outputting the steering angle reaction force control quantity Sm to stop outputting the steering angle reaction force control quantity Sm to stop the reaction force control by the steering angle reaction force controller 20c.

Fig. 5A is a block diagram of the steering angle reaction force controller having the function of stopping the reaction force control. Fig. 5B is a flowchart of stopping the reaction force control.

The basic steering angle reaction calculating unit 20c₁ shown in Fig. 5A calculates the steering angle reaction force control quantity Sm as mentioned above.

When detecting that the vehicle V is in the oversteer status, the output determining unit 20c₃ turns off the output control switch 20c₄ to disconnect an internal circuit thereof to stop outputting the steering angle reaction force control quantity Sm calculated by the basic steering angle reaction force calculating unit 20c₁. As mentioned above, the output determining unit 20c₃ stops the reaction force control of the steering angle reaction force controller 20c by stopping output of the steering angle reaction force control quantity Sm. In other words, the gain of the steering angle reaction force control quantity Sm is decreased to "0".

More specifically, as shown in Fig. 5B, the basic steering angle reaction force calculating unit 20c₁ (see Fig. 5A) of the steering angle reaction force controller 20c calculates the steering angle reaction force control quantity Sm on the basis of the actual yaw rate, the vehicle speed, and the steering angle of the steerable wheels 2R and 2L in step S10.

Further, the output determining unit 20c₃ of the steering angle reaction force controller 20c stops outputting the steering angle reaction force control quantity Sm by turning off the output control switch 20c₄ when the vehicle V is in the oversteer status (Yes in step S11). In other words, the steering angle reaction force controller 20c does not output the steering angle reaction force control quantity Sm by stop of outputting the reaction force control quantity Sm in step S12.

On the other hand, when the vehicle V is not in the oversteer status (No in step S11), the output determining unit 20c₃ turns on the output control switch 20c₄ to connect the internal circuit thereof. The steering angle reaction force controller 20c executes the reaction force control to output the steering angle reaction force control quantity Sm in step S13.

As mentioned above, the EPS ECU 20 causes the steering angle reaction force controller 20c to stop outputting the steering angle reaction force control quantity Sm when the vehicle V is in the oversteer status. As mentioned above, when the output of the steering angle reaction force control quantity Sm is stopped, the steering angle reaction force torque calculated by the EPS ECU 20 becomes "0". In other words, the EPS ECU 20 decreases the gain of the steering angle reaction force.

A method of determining whether the vehicle V is in the oversteer status or not in step S11 by the output determining unit 20c₃ is the same as the method done by the gain setting unit 20c₂ in the step S2.

The process shown in Fig. 5B is done by executing a program in the EPS ECU 20 shown in Fig. 4A in phase with timing when the EPS ECU 20 calculates the assist steering torque by the EPS ECU 20.

According to this configuration, the steering angle reaction force controller 20c does not output the steering angle reaction force control quantity Sm by stop of outputting the reaction force control quantity Sm. In other words, the EPS ECU 20 decreases the gain of the steering angle reaction force torque to "0" and calculates the assist steering torque without including the component of the steering angle reaction force torque.

Accordingly, this configuration suppresses occurrence of the torque (steering angle reaction torque) which interferes with the yaw rate reaction force torque based on the yaw rate reaction force control quantity Ym calculated by the yaw rate reaction force controller 20b, so that interference between the yaw rate reaction force torque and the steering angle reaction torque can be eliminated. The load on the driver in operating the steering wheel 21 can be decreased.

The output determining unit 20c₃ shown in Fig. 5A is not required to calculate the gain correction value SG, which decreases an operation load on the steering angle reaction force controller 20c. This can increase an operation speed of the steering angle reaction force controller 20c. For example, if the vehicle V is in the oversteer status, the load on the driver operating the steering wheel 21 can be decreased.

As mentioned above, the EPS ECU 20 of the electric power steering apparatus 1 according to the embodiment can assist the straightness stability of the vehicle V by the steering reaction torque calculated by the reaction force control. Further, the EPS ECU 20 decreases the load on the driver operating the steering wheel 21 who operates the steering wheel 21 in such a direction that the vehicle V becomes stable by decreasing the gain, in obtaining (calculating), of the steering reaction torque when the vehicle V is in the oversteer status.

## Claims

1. An electric power steering apparatus for a vehicle wherein the electric power steering apparatus (1) includes a steerable wheel (2L, 2R) and a steering mechanism that steers the steerable wheel (2L, 2R), the apparatus comprising:
a yaw rate sensor (18); an electric power steering (EPS) ECU (20) including an EPS controller (20a), a yaw rate reaction force controller (20b) and a steering angle reaction force controller (20c); a vehicle stability assist
(VSA) ECU (30) including a VSA controller (30a) configured to determine whether the vehicle (V) is in an oversteer status;
the yaw rate reaction force controller (20b) is configured to apply a reaction force (Ym) according to an actual yaw rate (Ys) of the vehicle (V) as detected by the yaw rate sensor (18) to the steering mechanism; and
the steering angle reaction force controller (20c) is configured to generate and apply to the steering mechanism a reaction force (Sm) according to a steering angle (θs) of the steerable wheel with a gain,
**characterized in that** the steering angle reaction force controller (20c) decreases interference between the reaction force (Ym) according to the actual yaw rate (Ys) and the reaction force (Sm) according to the steering angle (θs) by decreasing the gain of the reaction force (Sm) according to the steering angle (θs) when the VSA controller (30a) determines that the vehicle (V) is in the oversteer status.

2. The electric power steering apparatus as claimed in claim 1, the VSA controller (30a) determines that the vehicle is in the oversteer status, when the actual yaw rate (Ys) of the vehicle greater than a model yaw rate set in accordance with at least the steering angle (θs) of the steerable wheels and a vehicle speed (Vs) of the vehicle.

## Patentansprüche

1. Elektrische Servolenkvorrichtung für ein Fahrzeug, worin die elektrische Servolenkvorrichtung (1) ein lenkbares Rad (2L, 2R) und einen Lenkmechanismus, der das lenkbare Rad (2L, 2R) lenkt, enthält, wobei die Vorrichtung umfasst:
einen Gierratensensor (18);
eine elektrische Servolenkungs-(EPS)-ECU (20), die einen EPS-Controller (20a), einen Gierratenreaktionskraftcontroller (20b) und einen Lenkwinkelreaktionskraftcontroller (20c) enthält;
eine Fahrzeugstabilitätsunterstützungs-(VSA)-ECU (30), die einen VSA-Controller (30a) enthält, der konfiguriert ist zur Bestimmung, ob das Fahrzeug (V) in einem Übersteuerzustand ist;
wobei der Gierratenreaktionskraftcontroller (20b) konfiguriert ist, um an den Lenkmechanismus eine Reaktionskraft (Ym) gemäß einer aktuellen Gierrate (Ys) des Fahrzeugs (V) gemäß Erfassung durch den Gierratensensor (18) anzulegen; und
der Lenkwinkelreaktionskraftcontroller (20c) konfiguriert ist, um an dem Lenkmechanismus eine Reaktionskraft (Sm) gemäß einem Lenkwinkel (θs) des lenkbaren Rads mit einer Verstärkung zu erzeugen und anzulegen,
**dadurch gekennzeichnet, dass** der Lenkwinkelreaktionskraftcontroller (20d) eine Wechselwirkung zwischen der Reaktionskraft (Ym) gemäß der aktuellen Gierrate (Ys) und der Reaktionskraft (Sm) gemäß dem-Lenkwinkel (θs) verringert, indem er die Verstärkung der Reaktionskraft (Sm) gemäß dem Lenkwinkel (θs) verringert, wenn der VSA-Controller (30a) bestimmt, dass das Fahrzeug (V) im Übersteuerzustand ist.

2. Die elektrische Servolenkvorrichtung nach Anspruch 1, worin der VSA-Controller (30a) bestimmt, dass das Fahrzeug im Übersteuerzustand ist, wenn die aktuelle Gierrate (Ys) des Fahrzeugs größer als eine Modellgierrate ist, die gemäß zumindest dem Lenkwinkel (θs) der lenkbaren Räder und der Fahrgeschwindigkeit (Vs) des Fahrzeugs gesetzt ist.

## Revendications

1. Appareil de direction assistée électrique pour véhicule, dans lequel l'appareil de direction assistée électrique (1) comprend une roue directrice (2L, 5R) et un mécanisme de direction qui dirige la roue directrice (2L, 2R), l'appareil comprenant :
un capteur de vitesse de lacet (18) ;
une UCE (unité de commande électronique) de la direction assistée électrique (EPS) (20) comprenant un dispositif de commande de l'EPS (20a), un dispositif de commande de force de réaction de vitesse de lacet (20b) et un dispositif de commande de force de réaction d'angle de braquage (20c) ;
une UCE d'assistance à la stabilité du véhicule (VSA) (30) comprenant un dispositif de commande de la VSA (30a) configuré pour déterminer si le véhicule (V) est dans un état de survirage ;
le dispositif de commande de force de réaction de vitesse de lacet (20b) est configuré pour appliquer une force de réaction (Ym) selon une vitesse de lacet réelle (Ys) du véhicule (V) telle que détectée par le capteur de vitesse de lacet (18) au mécanisme de direction assistée ; et
le dispositif de commande de force de réaction d'angle de braquage (20c) est configuré pour générer et appliquer au mécanisme de direction une force de réaction (Sm) selon un angle de braquage (θs) de la roue directrice avec un gain,
**caractérisé en ce que** le dispositif de commande de force de réaction d'angle de braquage (20c) diminue l'interférence entre la force de réaction (Ym) selon la vitesse de lacet réelle (Ys) et la force de réaction (Sm) selon l'angle de braquage (θs) en diminuant le gain de la force de réaction (Sm) selon l'angle de braquage (θs) lorsque le dispositif de commande de la VSA (30a) détermine que le véhicule (V) est dans l'état de survirage.

2. Appareil de direction assistée électrique selon la revendication 1, dans lequel le dispositif de commande de la VSA (30a) détermine que le véhicule est dans l'état de survirage lorsque la vitesse de lacet réelle (Ys) du véhicule est supérieure à une vitesse de lacet modèle fixée en conformité avec au moins l'angle de braquage (θs) des roues directrices et une vitesse de véhicule (Vs) du véhicule.
